# EUROPEAN PATENT APPLICATION

(11) **EP 4 458 897 A1**
(43) Date of publication of application: **06.11.2024**
(21) Application number: 22916081.7
(22) Date of filing: 27.12.2022
(51) Int. Cl.: C08L 11/02, C08L 15/00, C08L 71/02, C08K 3/014, C08K 3/06, C08K 3/22

(54) **SULFUR-MODIFIED-POLYCHLOROPRENE LATEX COMPOSITION, PRODUCTION METHOD THEREFOR, SHAPED RUBBER OBJECT, AND DIP-FORMED PRODUCT**

(30) Priority: 27.12.2021 JP 2021213431
(71) Applicant: Resonac Corporation, Tokyo 105-7325 (JP)
(72) Inventor: MURATA Tomoaki, Tokyo 105-8518 (JP); OGAWA Noriko, Tokyo 105-8518 (JP); SHIBUYA Akira, Tokyo 105-8518 (JP)
(74) Representative: Strehl Schübel-Hopf & Partner
(86) International application number: PCT/JP2022/048123
(87) International publication number: WO 2023/127858

(57) **Abstract**

A method for producing a sulfur-modified polychloroprene latex composition, including a step of blending a sulfur-modified polychloroprene in which a chloroprene monomer and sulfur are copolymerized and a compound having a polyoxyalkylene structure; a sulfur-modified polychloroprene latex composition including a sulfur-modified polychloroprene in which a chloroprene monomer and sulfur are copolymerized and a compound having a polyoxyalkylene structure; and a rubber molded article and a dip-molded product, obtained from the composition.

## Description

### Technical Field

The present invention relates to a sulfur-modified polychloroprene latex composition comprising a sulfur-modified polychloroprene latex and a compound having a polyoxyalkylene structure, and a rubber molded article, a dip-molded product, and gloves, obtained from the same.

### Background Art

The standards for glove products made of natural rubber and/or synthetic rubber latex as raw materials require a certain strength at break thereof depending on use applications of gloves. Generally, these rubber materials are mixed with, for example, a vulcanizing agent and a vulcanization accelerator to progress a cross-linking reaction, allowing a strength of film to be increased. Among them, it has been known that chloroprene rubber has lower reactivity at a cross-linking point than other materials, making it difficult for cross-linking to proceed with a thiuram-based vulcanization accelerator or a carbamate-based vulcanization accelerator, and in order to cross-link chloroprene rubber, a thiourea-based vulcanization accelerator, which reacts with a dehydrochlorination site of chloroprene rubber as a cross-linking point, is often used.

However, the use of thiourea-based vulcanization accelerator is being increasingly avoided in the glove industry because ethylene thiourea is listed as a substance of very high concern (SVHC) under REACH (Registration, Evaluation, Authorization and Restriction of Chemicals).

When the thiourea-based vulcanization accelerator is not used in chloroprene rubber, the cross-linking reaction is extremely slow, leading to the problem of, for example, deterioration of glove productivity.

Moreover, since delayed allergies due to vulcanization accelerators have recently arisen a concern thereabout among medical professionals, there is required a method for efficiently progressing cross-linking without using a vulcanization accelerator, whether or not it is a thiourea-based vulcanization accelerator in the field of dip-molded products commencing with rubber gloves.

For example, Patent Literature 1 discloses a latex composition containing latex of a conjugated diene-based polymer, a vulcanizing agent, and a polyoxyalkylene-based surfactant, the content of which is 0.01 to 3 parts by weight relative to 100 parts by weight of the conjugated diene-based polymer.

For example, Patent Literature 2 discloses chloroprene latex characterized by containing an emulsifier composed of an alkali metal salt of a carboxylic acid and a specific nonionic emulsifier with an HLB of 9 to 16 and an alkyl chain with a branched chain, having 9 to 16 carbon atoms.

### Citation List

### Patent Literature

[Patent Literature 1] WO2020/054247
[Patent Literature 2] JP5262199

### Summary of Invention

### Technical Problem

Adding a surfactant having a polyoxyethylene structure to conjugated diene polymer latex has been reported to enable reduction of the primary vulcanization reaction time upon compound storage. However, chloroprene rubber (CR) has significantly less reactivity of the main chain diene structure due to the chloro group, compared to conjugated diene polymers such as natural rubber, isoprene rubber, and styrene · butadiene · rubber (SBR). For this reason, a thiourea-based vulcanization accelerator is often used to vulcanize chloroprene, and a reaction point is also known to be the dehydrochlorination site present in a chloroprene polymer.

As described above, due to the factor that chloroprene rubber has a mechanism of cross-linking reaction different from that of other conjugated diene polymers, the effect of accelerating cross-linking by addition of a surfactant having a polyoxyethylene structure, has not been obtained yet. Moreover, for the purpose of improving storage stability and freezing stability of chloroprene rubber in its latex state, there is also proposed a case where a nonionic surfactant having a polyoxyethylene structure is added to conjugated diene polymer latex, however, no effect of accelerating the cross-linking reaction has been obtained.

Since a cross-linking reaction rate of a rubber material is directly related to its productivity and performance of disposable gloves, chloroprene latex as well as natural rubber (NR) and acrylonitrile · butadiene rubber (NBR) also require a method for improving a mechanical strength.

An object to be solved by one embodiment according to the present invention is to provide a sulfur-modified polychloroprene latex composition excellent in mechanical strength of a molded article to be obtained and a production method thereof. Another object to be solved by one embodiment according to the present invention is to provide a rubber molded article and a dip-molded product, excellent in mechanical strength.

### Solution to Problem

Means to solve the aforementioned objects include the following aspects.
<1> A method for producing a sulfur-modified polychloroprene latex composition, comprising a step of blending a sulfur-modified polychloroprene in which a chloroprene monomer and sulfur are copolymerized and a compound having a polyoxyalkylene structure.
<2> The method for producing a sulfur-modified polychloroprene latex composition according to <1>, wherein the content of sulfur in the sulfur-modified polychloroprene is 0.1 to 1.0% by mass.
<3> The method for producing a sulfur-modified polychloroprene latex composition according to <1> or <2>, wherein the content of the compound having a polyoxyalkylene structure is 0.1 to 3.0% by mass relative to the total mass of the sulfur-modified polychloroprene.
<4> The method for producing a sulfur-modified polychloroprene latex composition according to any one of <1> to <3>, wherein in the step of blending, a metal oxide, a vulcanization accelerator, sulfur and an antioxidant are further blended.
<5> A sulfur-modified polychloroprene latex composition, comprising a sulfur-modified polychloroprene in which a chloroprene monomer and sulfur are copolymerized, and a compound having a polyoxyalkylene structure.
<6> The sulfur-modified polychloroprene latex composition according to <5>, wherein the content of sulfur in the sulfur-modified polychloroprene is 0.1 to 1.0% by mass.
<7> The sulfur-modified polychloroprene latex composition according to <5> or <6>, wherein the content of the compound having a polyoxyalkylene structure is 0.1 to 3.0% by mass relative to the total mass of the sulfur-modified polychloroprene.
<8> The sulfur-modified polychloroprene latex composition according to any one of <5> to <7>, comprising a metal oxide, a vulcanization accelerator, sulfur and an antioxidant.
<9> A rubber molded article obtained from the sulfur-modified polychloroprene latex composition according to any one of <5> to <8>.
<10> A dip-molded product obtained from the sulfur-modified polychloroprene latex composition according to any one of <5> to <8>.
<11> The dip-molded product according to <10>, wherein the dip-molded product is gloves.

### Advantageous Effect of Invention

According to one embodiment according to the present invention, there is provided a sulfur-modified polychloroprene latex composition resulting in a molded article to be obtained having an excellent mechanical strength and a method for producing the same. According to another embodiment according to the present invention, a rubber molded article and dip-molded product, excellent in mechanical strength are also provided.

### Description of Embodiment

Contents of the present invention will be described in detail below. The contents of the constituent features described below may be described based on the representative embodiments of the present invention, however, the present invention is not limited to such embodiments.

As used herein, "to" indicating a numerical value range is used in the meaning of including numerical values described before and after "to" as the lower limit value and the upper limit value, respectively.

As used herein, "to" indicating a numerical value range means that the unit described either before or after "to" indicate the same unit unless otherwise noted.

Combinations of two or more preferred aspects used herein are more preferred aspects.

The total solid used herein refers to the total mass of components in which a solvent is excluded from the total component.

The present invention will be described in detail below.

### (Sulfur-modified polychloroprene latex composition)

The sulfur-modified polychloroprene latex composition according to the present invention contains a sulfur-modified polychloroprene in which a chloroprene monomer and sulfur are copolymerized, and a compound having a polyoxyalkylene structure. The sulfur-modified polychloroprene latex composition has the above configuration, resulting in a molded article to be obtained having an excellent mechanical strength. The reason for this is not clear, but is presumed to be as follows.

The present inventors have found as a result of their diligent investigations that the sulfide bond contained in a polymer chain of a sulfur-modified polychloroprene (hereinafter also referred to as "sulfur-modified polychloroprene latex"), which is obtained by copolymerizing a chloroprene monomer and sulfur, is highly compatible with a polyoxyalkylene structure, thereby making it possible for addition of a compound having a polyoxyalkylene structure to improve mobility of the polymer chain upon a cross-linking reaction. It is presumed that as a result, an effect of accelerating cross-linking reactivity of the sulfur-modified polychloroprene latex by addition of a compound having a polyoxyalkylene structure (hereinafter also referred to as "vulcanization-accelerating effect"), which has not been achieved with conventional chloroprene rubber, is obtained, thereby resulting in a molded article obtained from the aforementioned composition being excellent in its mechanical strength.

This vulcanization-accelerating effect can be exhibited even in a system where no vulcanization accelerator is added to a sulfur-modified polychloroprene, thereby making it possible to reduce and eliminate addition of vulcanization accelerator that causes an allergy upon film formation.

The sulfur-modified polychloroprene latex composition will be described in detail below.

### <Sulfur-modified polychloroprene>

The sulfur-modified polychloroprene (sulfur-modified polychloroprene latex (A)) may be a copolymer in which 2-chloro-1,3-butadiene (chloroprene) (A-1) monomer and sulfur (A-2) are copolymerized, or may be a copolymer in which a chloroprene monomer, a monomer copolymerizable with chloroprene, and sulfur are copolymerized.

The monomer copolymerizable with chloroprene is not particularly limited as long as it does not impair the purpose of the present invention, and examples thereof include, for example, 2,3-dichloro-1,3-butadiene, 1-chloro-1,3-butadiene, butadiene, isoprene, styrene, acrylonitrile, acrylic acid and an ester thereof, methacrylic acid and an ester thereof. Among these, preferred are 2,3-dichloro-1,3-butadiene and 1-chloro-1,3-butadiene, and more preferred is 2,3-dichloro-1,3-butadiene.

The content of the monomer copolymerizable with chloroprene is preferably in a range of 0.1 to 20 parts by mass relative to 100 parts by mass of 2-chloro-1,3-butadiene (chloroprene) (A-1).

The monomer copolymerizable with chloroprene may be used singly or in combinations of two or more thereof.

Controlling the amount of monomer copolymerizable with chloroprene to 20 parts by mass or less relative to 100 parts by mass of 2-chloro-1,3-butadiene (chloroprene) (A-1), enables to maintain favorably stability of flexibility in an elapsed time in addition to a tensile strength and elongation.

### <Sulfur (A-2)>

The sulfur to be copolymerized with a chloroprene monomer is not particularly limited as long as it is substantially composed only of sulfur atoms and is elemental sulfur used for a cross-linking agent application for crosslinking various types of rubbers. The elemental sulfur that acts on a carbon-carbon double bond moiety in a monomer unit of conjugated diene is preferable. The sulfur may be, for example, powdered sulfur, sedimented sulfur, colloidal sulfur, insoluble sulfur, and highly dispersed sulfur.

A shape of sulfur is not particularly limited and may be cyclic or chain-like.

The content of sulfur in the sulfur-modified polychloroprene is preferably 0.1 to 1.0% by mass, more preferably 0.1 to 0.5% by mass, and further preferably 0.15 to 0.50% by mass, relative to the total mass of sulfur-modified polychloroprene.

### [Method for producing sulfur-modified polychloroprene latex (A)]

The method for copolymerizing a chloroprene monomer and sulfur (method for producing sulfur-modified polychloroprene latex (A)) is not particularly limited, and is preferably emulsion polymerization and particularly preferably aqueous emulsion polymerization from the industrial viewpoint.

As an emulsifier for emulsion polymerization, an anionic surfactant is preferable, and from the viewpoint of facilitation of coagulation operation, a normal rosin acid soap is preferably used.

Specific examples of the anionic surfactant other than the rosin acid soap include, for example, a sodium salt of a naphthalenesulfonic acid condensate, a sodium salt of dodecylbenzenesulfonic acid, and a sodium salt of dodecylsulfuric acid.

When using the rosin acid soap as an emulsifier, the amount of rosin acid soap used is preferably 3 to 8 parts by mass and more preferably 3 to 5 parts by mass in terms of rosin acid, relative to 100 parts by mass of the total of a chloroprene monomer and a monomer copolymerizable with the chloroprene monomer.

The amount of the rosin acid soap used, which is 3 parts by mass or more and 8 parts by mass or less, enables favorable emulsification to be achieved, as a result of which precise control of polymerization heat generation can be achieved, development of aggregate is inhibited, and a favorable product appearance can be obtained.

Addition of a dispersant such as a condensate of sodium naphthalene sulfonate and formaldehyde, makes it possible to inhibit development of the abovementioned aggregate created even in an emulsification system wherein the amount of the dispersant is 3 parts by mass or less in terms of rosin acid.

When the amount of the rosin acid soap is 8 parts by mass or less, rosin acid does not remain, facilitating detaching parts from a mold (former) upon part molding and delaminating parts upon part use to obtain favorable processability and operability, as well as a favorable color tone of a product.

As the polymerization initiator, a normal radical polymerization initiator can be used. For example, in the case of emulsion polymerization, conventional organic or inorganic peroxides such as benzoyl peroxide, potassium persulfate, and ammonium persulfate, and azo compounds such as azobisisobutyronitrile are used. In addition thereto, promoters such as anthraquinone sulfonate, potassium sulfite, and sodium sulfite can be appropriately used.

Generally, in production of the sulfur-modified polychloroprene latex, for the purpose of obtaining a polymer with a desired molecular weight and distribution, a polymerization terminator is added to terminate reaction when a predetermined rate of polymerization is reached. The polymerization terminator is not particularly limited, and commonly used polymerization terminators such as phenothiazine, para-t-butylcatechol, hydroquinone, hydroquinone monomethyl ether, and diethylhydroxylamine can be used.

In the method for producing the sulfur-modified polychloroprene latex, the amount of sulfur compounded is preferably 0.1 to 1.0 parts by mass, more preferably 0.1 to 0.5 parts by weight, and further preferably 0.15 to 0.50 parts by weight, relative to 100 parts by mass of the total of 2-chloro-1,3-butadiene (chloroprene) or a chloroprene monomer, and a monomer copolymerizable therewith.

The amount of sulfur compounded that is 0.1 parts by mass or more allows cross-linking reactivity of the sulfur-modified polychloroprene latex (A) to be improved. With the amount of sulfur compounded that is 1.0 parts by mass or less, a favorable polymerization conversion rate can be obtained without inhibition of the polymerization reaction.

Note, however, the sulfur fed which was used in reaction is assumed to be such that the entire amount of sulfur fed remains in the sulfur-modified polychloroprene latex (A).

When a monomer copolymerizable with chloroprene is used, the copolymerizable monomer is preferably added in the amount compounded within a range of 0.1 to 20 parts by mass relative to 100 parts by mass of 2-chloro-1,3-butadiene (chloroprene).

### <Compound having polyoxyalkylene structure>

The compound having a polyoxyalkylene structure is not particularly limited as long as a desired effect of the present invention can be obtained, and a wide variety of compounds can be used regardless of, for example, their molecular weights and hydrophobicity.

As the compound having a polyoxyalkylene structure, for example, nonionic surfactants such as a polyethylene glycol having an ethylene glycol as a unit structure and a polyoxyalkylene alkyl ether can be used.

Specific examples of the compound having a polyoxyalkylene structure include, for example, a polyoxyethylene lauryl ether, a polyoxyethylene cetyl ether, a polyoxyethylene stearyl ether, a polyoxyethylene oleyl ether, a polyoxyethylene alkyl ether, a polyoxyethylene myristyl ether, a polyoxyethylene octyl dodecyl ether, a polyoxyalkylene alkyl ether, a polyoxyphenylene distyrenated phenyl ether, polyoxyethylene tribenzylphenyl ether, a polyoxyethylene tribenzyl phenyl ether, a polyoxyethylene polyoxypropylene glycol, a polyoxyalkylene alkenyl ether, a polyoxyethylene nonylphenyl ether, a polyoxyethylene alkyl ether phosphate, a polyoxyethylene sorbitan monolaurate, a polyoxyethylene sorbitan monopalmitate, a polyoxyethylene sorbitan monostearate, a polyoxyethylene sorbitan tristearate, a polyoxyethylene sorbitan monooleate, a polyoxyethylene sorbitan triisostearate, a polyoxyethylene sorbitol tetraoleate, a polyethylene glycol monolaurate, a polyethylene glycol monostearate, a polyethylene glycol distearate, a polyethylene glycol monooleate, a polyoxyethylene hydrogenated castor oil, and a polyoxyethylene alkylamine.

The compound having a polyoxyalkylene structure may be used singly or in combinations of two or more thereof.

The compound having a polyoxyalkylene structure may be obtained by its synthesis or may be a commercially available product. Examples of the commercially available products include, for example, EMULGEN 103, 104P, 106, 108, 109P, 120, 123P, 130K, 147, 150, 210P, 220, 306P, 320P, 350, 404, 408, 409PV, 420, 430, 705, 707, 709, 1108, 1118S-70, 1135S-70, 1150S-60, 2020G-HA, 2025G, LS-106, LS-110, LS-114, MS-110, A-60, A-90, B-66, PP-290, LATEMUL PD-420, PD-430, PD-430S, PD450, SUPER SP-L10, AS-10V, AO-10V, AO-15V, TW-L120, TW-L106, TW-P120, TW-S120V, TW-S320V, TW-O120V, TW-O106V, TW-IS399C, SUPER TW-L120, 430V, 440V, 460V, MS-50, MS-60, MO-60, MS-165V, EMANON 1112, 3199V, 3299V, 3299RV, 4110, CH-25, CH-40, CH-60 (K), AMIET 102, 105, 105A, 302, 320, AMINON PK-02S, L-02, HOMOGENOL L-95 (all above, manufactured by Kao Corporation), and ADEKA PLURONIC (registered trademark) L-23, 31, 44, 61, 62, 64, 71, 72, 101, 121, TR-701, 702, 704, 913R (all above manufactured by ADEKA Corporation).

From the viewpoint of facilitating obtaining a vulcanization-accelerating effect, as the compound having a polyoxyalkylene structure, the compound represented by the following Formula (1) is preferable.

### [Chem. 1]

R₁O- (CR₂R₃O) ₙ- (CR₄R₅CR₆R₇O) ₘ- (CR₈R₉CR₁₀R₁₁CR₁₂ R₁₃O) ₁- (CR₁₄R₁₅CR₁₆R₁₇CR₁₈R₁₉CR₂₀R₂₁O) ₒ- (CR₂₂R₂₃C R₂₄R₂₅CR₂₆R₂₇CR₂₈R₂₉CR₃₀R₃₁O) ₚ-R₃₂ ··· Formula (1)

In Formula (1), R₁ is a hydrocarbon group having 6 to 20 carbon atoms, R₂ to R₃₁ are groups each independently selected from the group consisting of a hydrogen atom, a methyl group, and an ethyl group, and R₃₂ is a hydrogen atom or SO₃M, M above is a hydrogen atom, Na, K, NH₄, or NH(CH₂CH₂OH)₃, and n, m, l, o and p are each independently an integer represented by 0 to 50, however, n + m + l + o + p is an integer represented by 3 to 50, and the arrangement order of repeating units is not particularly limited.

In Formula (1), the hydrocarbon group represented by R₁ may be linear, branched, or cyclic, may be a saturated hydrocarbon group, or may be an unsaturated hydrocarbon group.

R₁ is preferably a hydrocarbon group having 2 to 18 carbon atoms, more preferably a hydrocarbon group having 6 to 14 carbon atoms, and further preferably a hydrocarbon group having 6 to 11 carbon atoms. R₁ is preferably a linear hydrocarbon group.

R₂ to R₃₁ are each independently preferably a methyl group or a hydrogen atom and more preferably a hydrogen atom.

When R₃₂ is SO₃M, M is preferably a hydrogen atom, Na, K, or NH₄ and more preferably Na or K.

n, m, l, o and p are each independently preferably 0 to 30 (provided that n + m + l + o + p is 3 to 30) and more preferably 0 to 20 (provided that n + m + l + o + p is 3 to 20), and further preferably 0 to 10 with n + l + o + p being further preferably 0 (provided that n + m + l + o + p is 3 to 10), and particularly preferably 0 to 5 with n + l + o + p being particularly preferably 0 (provided that n + m + l + o + p is 3 to 5).

The content of the compound having a polyoxyalkylene structure is preferably 0.1 to 3.0 parts by mass and more preferably 0.3 to 1.0 parts by mass, relative to 100 parts by mass of the solid content of the sulfur-modified polychloroprene latex.

When the content of the compound having a polyoxyalkylene structure is 0.1 parts by mass or more, a vulcanization-activating effect is obtained, and when the content is 3.0 parts by mass or less, film formability is excellent upon dip molding, and a normal film is likely to be obtained.

The sulfur-modified polychloroprene latex composition may contain, in addition to the aforementioned sulfur-modified polychloroprene latex (A) and the compound having a polyoxyalkylene structure, each of sulfur (B), a metal oxide (C), a vulcanization accelerator (D), an antioxidant (E), and a chain transfer agent (F) singly, or two or more types thereof.

From the viewpoint of obtaining a sulfur-modified polychloroprene latex composition capable of forming a dip-molded product with a sufficient tensile strength and flexibility, the sulfur-modified polychloroprene latex composition preferably contains the sulfur (B), metal oxide (C), vulcanization accelerator (D), and antioxidant (E).

Since the sulfur-modified polychloroprene latex composition contains the compound having a polyoxyalkylene structure, it exhibits sufficient vulcanization activity even in the case of being free of the metal oxide (C) and vulcanization accelerator (D), making it possible to obtain a dip-molded product with a high tensile strength.

### <<Sulfur (B)>>

Suitable examples of the sulfur (B) include the same sulfur as sulfur (A-2) used in copolymerization of the chloroprene monomer and sulfur.

The content of sulfur (B) is preferably 0.1 to 5.0 parts by mass, more preferably 0.3 to 3.0 parts by mass, and further preferably 0.5 to 2.0 parts by mass, relative to 100 parts by mass of the solid content of the sulfur-modified polychloroprene latex composition.

### <<Metal oxide (C)>>

The metal oxide (B) is not particularly limited, and specific examples thereof include, for example, zinc oxide, lead oxide, and trilead tetroxide with zinc oxide being particularly preferred among these.

The metal oxide (C) may be used singly or in combinations of two or more thereof.

The content of metal oxide (C) is preferably 10 parts by mass or less, more preferably 1.0 to 10.0 parts by mass, further preferably 1.0 to 9.0 parts by mass, and particularly preferably 3.0 to 8.0 parts by mass, relative to 100 parts by mass of the solid content of the sulfur-modified polychloroprene latex composition. When the content of the metal oxide (C) is 10 parts by mass or less, a suitable cross-linking rate is likely to result, scorch is inhibited, colloidal stability of the sulfur-modified polychloroprene latex composition is also excellent, and sedimentation, for example, can be inhibited from developing.

### <<Vulcanization accelerator (D)>>

The sulfur-modified polychloroprene latex composition may contain a vulcanization accelerator (D).

The vulcanization accelerator (D) is not particularly limited as long as it has been conventionally and commonly used for vulcanization (cross-linking) of sulfur-modified polychloroprene latex, and examples of the vulcanization accelerator (D) include, for example, a thiuram-based, dithiocarbamate-based, thiourea-based, or guanidine-based vulcanization accelerator (D).

Examples of the thiuram-based vulcanization accelerator include, for example, tetraethylthiuram disulfide and tetrabutylthiuram disulfide.

Examples of the dithiocarbamate-based vulcanization accelerator include, for example, sodium dibutylthiodicarbamate, zinc dibutylthiodicarbamate, and zinc diethylthiodicarbamate.

Examples of the thiourea-based vulcanization accelerator include, for example, ethylenethiourea, diethylthiourea, trimethylthiourea, and diphenylthiourea.

Examples of the guanidine-based vulcanization accelerator include, for example, diphenylguanidine and diorthotolylguanidine.

The content of the vulcanization accelerator is preferably 0.1 to 5.0 parts by mass, more preferably 0.3 to 3.0 parts by mass, and further preferably 0.5 to 1.5 part by mass relative to 100 parts by mass of the solid content of polychloroprene latex.

When the content of the vulcanization accelerator (D) is 0.1 part by mass or more, a sufficient cross-linking rate can be obtained. When the content is 5.0 parts by mass or less, an appropriate cross-linking rate can be obtained, as a result of which scorch is inhibited and development of, for example, aggregates will be unlikely. Furthermore, a molded article comes to have an appropriate cross-linking density to obtain favorable flexibility.

### <<Antioxidant (E)>>

When the antioxidant (E) is required to have its ultimate heat resistance, an antioxidant aiming to impart heat resistance (heat-resistant anti-aging agent) and an ozone-resistant antioxidant (ozone-resistant anti-aging agent) are preferably used.

One type of antioxidant may be used singly, or two or more types thereof may be used in combination. The heat-resistant anti-aging agent and the ozone-resistant anti-aging agent are preferably used in combination.

As the heat-resistant anti-aging agent, diphenylamine compounds such as octylated diphenylamine, p-(p-toluenesulfonylamide)diphenylamine, and 4,4'-bis(α, α-dimethylbenzyl)diphenylamine are preferably used because of not only their heat resistant but also excellent stain resistance (for example, inhibition of discoloration).

Examples of the ozone-resistant anti-aging agent include, for example, N,N'-diphenyl-p-phenylenediamine (DPPD) and N-isopropyl-N'-phenyl-p-phenylenediamine (IPPD). However, in a case in which appearance, particularly a color tone and hygiene, are important, such as in medical glove, a hindered phenol-based antioxidant is usually preferably used.

The content of the antioxidant (E) is preferably 0.1 to 5.0 parts by mass, more preferably 0.5 to 4.0 parts by mass, and further preferably 1.0 to 3.0 parts by mass, relative to 100 parts by mass of the solid content of the sulfur-modified polychloroprene latex (A). When the content of the antioxidant (E) is 0.1 part by mass or more, a sufficient antioxidant effect can be obtained. When the content of the antioxidant (E) is 5.0 parts by mass or less, appropriate formation of cross-link is likely, and a desired color tone has a likelihood to be obtained.

### <<Chain transfer agent (F)>>

The chain transfer agent is used mainly to adjust a molecular weight and a molecular weight distribution. Examples of the chain transfer agent used in one embodiment of the present invention include, for example, a dialkylxanthogen disulfide and an alkyl mercaptan.

Examples of the dialkylxanthogen disulfide include, for example, diisopropylxanthogen disulfide, diethylxanthogen disulfide, dicyclohexylxanthogen disulfide, dilaurylxanthogen disulfide, and dibenzylxanthogen disulfide. Examples of the alkyl mercaptan also include, for example, n-dodecyl mercaptan, n-decyl mercaptan, and octyl mercaptan.

One type of chain transfer agent may be used singly, or two or more types of chain transfer agents may also be used in combination as long as the purpose of the present invention is not impaired.

### <Method for producing sulfur-modified polychloroprene latex composition>

The method for producing a sulfur-modified polychloroprene latex composition according to the present invention includes a step of blending a sulfur-modified polychloroprene in which a chloroprene monomer and sulfur are copolymerized and a compound having a polyoxyalkylene structure (hereinafter referred to as a "blending step" or simply as a "step").

The above blending method is not particularly limited, and any known mixing method can be used. A temperature upon blending is usually preferably 20°C to 40°C.

The method for producing a sulfur-modified polychloroprene latex composition according to the present invention is preferably a method for further blending the sulfur (B), metal oxide (C), vulcanization accelerator (D), and antioxidant (E) in the above blending step.

Among the sulfur (B), metal oxide (C), vulcanization accelerator (D), antioxidant (E), and chain transfer agent (F), it is preferable to preliminarily fabricate aqueous dispersions of those insoluble in water or those rendering unstable colloidal conditions of sulfur-modified polychloroprene latex (A) and to add these aqueous dispersions to the sulfur-modified polychloroprene latex (A).

The method for producing a sulfur-modified polychloroprene latex composition may include a step in addition to the above steps. Examples of the step include, for example, a step of providing a sulfur-modified polychloroprene latex (A) by polymerization of a chloroprene monomer and sulfur, and a pH adjustment step.

An example of the step of providing a sulfur-modified polychloroprene latex (A) suitably include the method for producing the sulfur-modified polychloroprene latex (A) described above.

The pH adjustment step is preferably a step of adjusting pH after copolymerization of a chloroprene monomer and sulfur.

### <Rubber molded article>

From the viewpoint of being excellent in mechanical strength, the rubber molded article according to the present invention is obtained from the aforementioned sulfur-modified polychloroprene latex composition.

The rubber molded article is preferably obtained by cross-linking a sulfur-modified polychloroprene latex composition. The sulfur-modified polychloroprene latex composition can be cross-linked by the same method as a cross-linking method used in the method for producing a dip-molded product described below.

A shape of the rubber molded article is not particularly limited, and may be, for example, film-like or platy.

### <Dip-molded product>

The dip-molded product according to the present invention is obtained from the sulfur-modified polychloroprene latex composition described above. The dip-molded product according to the present invention is preferably a dip-molded product obtained by dipping and cross-linking the sulfur-modified polychloroprene latex composition.

The dipping method is not particularly limited, and examples thereof include known dipping methods, and suitably include the dipping method described in Examples.

Examples of the dip-molded product include, for example, gloves, sphygmomanometer bladders, and rubber threads, and among these, gloves are preferred, which are particularly suitable for use in medical gloves.

### <<Method for producing dip-molded product>>

The method for producing a dip-molded product according to the present invention preferably has a step of dipping the above sulfur-modified polychloroprene latex composition to obtain a molded article, and a step of cross-linking the obtained molded article.

Specifically, it is more preferable to have a step of dipping and solidifying the above sulfur-modified polychloroprene latex composition by a conventional method, followed by exudation (removal of water-soluble impurities), drying, and then cross-linking. By proceeding with these steps in this order, a dip-molded product, which is a rubber molded article in form of film, is obtained.

In order to avoid problems with product appearance, such as blisters and pinholes, the method for producing a dip-molded product preferably include a rough drying step at a relatively low temperature in a range of 70 to 100°C before cross-linking.

Examples of a cross-linking temperature can include 100 to 140°C and examples of a crosslinking time can include 20 minutes to 60 minutes. It is preferable that the crosslinking is completely carried out in range that a tensile strength and elongation at break are not deteriorated.

Conducting a tensile test on a cross-linked film (dip-molded product), enables to measure an elastic modulus (modulus), tensile strength, and elongation at break.

The strength of the rubber molded article in form of film obtained from a sulfur-modified polychloroprene latex composition containing the compound having a polyoxyalkylene structure varies depending on a raw material added at the same time; however, the strength of the rubber molded article in form of film is superior in mechanical strength, the tensile strength of which is increased by 20% or more, compared to the tensile strength of a film (ref) molded from a sulfur-modified polychloroprene latex composition free of the compound having a polyoxyalkylene structure.

### Examples

The present invention will be described below with reference to Examples and Comparative Examples, but the present invention is in no way limited to the following Examples.

### <Polymerization conversion rate>

Latex after polymerization was collected, and the polymerization conversion rate was calculated based on the solid content after having dried this latex at 141°C for 30 minutes. The solid content and polymerization conversion rate were calculated by the following Formula. Solid content [% by mass] = [(mass of latex after drying at 141°C for 30 minutes)/(mass of latex before drying)] × 100 Polymerization conversion rate [%] = [(amount of polymer produced/amount of monomer charged)] × 100]

Herein, the amount of polymer produced was determined by subtracting the solid content other than the polymer from the solid content after polymerization (the mass of latex after drying at 141°C for 30 minutes). The solid content other than the polymer was calculated by subtracting a component that does not volatilize under 141°C conditions from the polymerization raw materials.

### fabrication of dip-molded cross-linked film>

A composition of sulfur-modified polychloroprene latex was fabricated in the amounts compounded shown in Table 2 or 3 below, according to the following production method. Next, a stirring tank with a three-one motor was charged with the above sulfur-modified polychloroprene latex composition, which was then stirred for 5 minutes. The stirred composition of sulfur-modified polychloroprene latex was allowed to stand at room temperature (20°C) for 24 hours and then aged.

A ceramic plate with a length of 200 mm, width of 100 mm, and thickness of 5 mm was prepared as a mold for a dip-molded film. The mold was dipped in a 30% by mass calcium nitrate aqueous solution as a coagulating liquid, and dried in an oven at 40°C for 5 minutes.

The dried mold described above was dipped in a sulfur-modified polychloroprene latex composition, pulled up to form a film, which was dried in an oven at 70°C for 30 minutes. Next, the resulting film was heated in a conventional oven at 130°C for 30 minutes for crosslinking. After being cooled in the atmosphere, it was cut out from the mold to obtain a dip-molded cross-linked film (dip-molded product) that is cross-linked.

### <Evaluation of physical properties of dip-molded cross-linked film (rubber molded article)>

The physical properties of the sulfur-modified polychloroprene latex were evaluated by the following method.

In accordance with JIS-K6251 (2017), the dip-molded cross-linked film after the cross-linking described above was cut with a No. 6 dumbbell to obtain a test piece, which had a thickness of 0.15 to 0.25 mm.

### <Mechanical strength: Tensile test>

The tensile test was conducted in accordance with JIS-K6251 (2017), and a modulus (MPa) at 300% elongation, tensile strength (MPa) and elongation at break (%), at room temperature were measured.

An improvement ratio (%) of the strength at break was calculated by substituting the measured value of the tensile strength (MPa) into the following Formula. It can be said that the larger the value of the improvement ratio of the strength at break, the superior the mechanical strength. Improvement ratio of strength at break (%) = (Tensile strength of addition system - Tensile strength of ref)/(Tensile strength of ref)

The tensile strength of the addition system in the above Formula refers to the measured value of the tensile strength of the dip-molded cross-linked film fabricated from the sulfur-modified polychloroprene latex composition containing the compound having a polyoxyalkylene structure listed in Table 2 or Table 3 (the composition in the column, for example, Addition system 1-1).

The tensile strength of the ref in Formula above refers to the measured value of the tensile strength of the dip-molded cross-linked film fabricated from the sulfur-modified polychloroprene latex composition free of the compound having a polyoxyalkylene structure(the composition listed in the column of ref in Table 2 or Table 3).

### <Production Example 1: Production of sulfur-modified polychloroprene latex (A)>

Using a reactor with an internal volume of 5 liters, it was charged with 1.50 kg of 2-chloro-1,3-butadiene (chloroprene) (manufactured by Tokyo Chemical Industry Co., Ltd.), 1.29 kg of pure water, and 51 g of rosin acid (Rosin HTR, manufactured by Arakawa Chemical Industries, Ltd.), 3.8 g of sulfur (0.25 parts), 57.8 g of potassium hydroxide, 29.7 g of sodium hydroxide, 15 g of sodium salt of a β-naphthalenesulfonic acid formalin condensate, and 11.7 mg of copper sulfate, and the mixture was emulsified to chemically convert the rosin acid to rosin acid soap (mixture of potassium rosin acid and sodium rosin acid), and then using potassium persulfate as an initiator, polymerization was carried out at an initial polymerization temperature of 40°C under a nitrogen atmosphere, and after the polymerization conversion rate reached 90%, the temperature was raised to 45°C followed by polymerization. When the polymerization conversion rate was confirmed to be 95% or higher, the polymerization was terminated. Thereafter, the unreacted monomer was removed by steam distillation, and 50 g of diethanolamine (manufactured by Nippon Shokubai Co., Ltd.) was added to obtain sulfur-modified polychloroprene latex (A).

### [Example 1]

To the sulfur-modified polychloroprene latex obtained in Production Example 1 was added the compound having a polyoxyalkylene structure in the amount shown in Table 2 to obtain a sulfur-modified polychloroprene latex composition. The sulfur-modified polychloroprene latex composition was fabricated into a dip-molded film by the method described in the fabrication of a dip-molded film.

In the Addition system 1-1 in Table 2, EMULGEN (registered trademark) 709 (manufactured by Kao Corporation) was used, in the Addition system 1-2, EMULGEN (registered trademark) 1118S-70 (manufactured by Kao Corporation) was used, and in the Addition system 1-3, a polyethylene glycol (manufactured by Kanto Chemical Co., Inc.) was used.

The substances for the polymerization prescription are compounded for the following purposes.
· Pure water: Dispersion medium for emulsion polymerization
· Chloroprene, 2,3-dichloro-1,3-butadiene, and sulfur: Raw material monomers
· Rosin acid: Emulsifier raw material
· Potassium hydroxide and sodium hydroxide: Emulsifier raw materials
· Rosin acid, potassium hydroxide, and sodium hydroxide were mixed and saponified to obtain a mixture of potassium rosin acid and sodium rosin acid, which was used as an emulsifier.
· Sodium salt of a β-naphthalenesulfonic acid formalin condensate: Dispersant
· Copper sulfate: Promotor
· Diethanolamine: pH adjuster
· n-Dodecyl mercaptan: Chain transfer agent
· Zinc oxide dispersion

The details of the compounds used to fabricate the dip-molded film are as follows. R₁ in the column of the compound having a polyoxyalkylene structure refers to R₁ in Formula (1) above.

**[Table 1]**

| | Product name | Compound name | Manufacturer |
|---|---|---|---|
| Metal oxide (C) | AZ-SW | Zinc oxide | OSAKI INDUSTRY CO., LTD. |
| Sulfur (B) | S-50 (water dispersion of sulfur) | Cyclic sulfur S8 | NIPPON COLOR INDUSTORY CO., LTD. |
| Vulcanization accelerator (D) | NOCCELER BZ (ZDBC) | Zinc dibutyldithiocarbamate | OUCHI SHINKO CHEMICAL INDUSTRIAL CO., LTD. |
| | NOCCELER C (DPTU) | Diphenylthiourea | OUCHI SHINKO CHEMICAL INDUSTRIAL CO., LTD. |
| | NOCCELER D (DPG) | Diphenylguanidine | OUCHI SHINKO CHEMICAL INDUSTRIAL CO., LTD. |
| Antioxidant (E) | K-840 (WingstayL water dispersion) | Oligomer type hindered phenol | CHUKYO YUSHI CO.,LTD. |
| Compound having a polyoxyalkylene structure | EMULGEN 404 | Polyoxyethylene (4) oleyl ether | Kao Corporation |
| | | R₁: Linear unsaturated hydrocarbon group having 18 carbon atoms | |
| | | The number of repeating units of polyoxyalkylene moietv: 4 | |
| | EMULGEN 709 | Polyoxyethylene (9) alkyl (sec-C11-C15) ether | Kao Corporation |
| | | R₁: Branched hydrocarbon group having 11 to 15 carbon atoms | |
| | | The number of repeating units of polyoxyalkylene moietv: 9 | |
| | EMULGEN 1118S-70 | Polyoxyethylene alkyl ether | Kao Corporation |
| | | R₁: Hydrocarbon group having 11 carbon atoms | |
| | | The number of repeating units of polvoxvalkvlene moietv: 18 | |
| | EMULGEN 1135S-70 | Polyoxyethylene alkyl ether | Kao Corporation |
| | | R₁: Hydrocarbon group having 11 carbon atoms | |
| | | The number of repeating units of polyoxyalkylene moietv: 35 | |
| | EMULGEN 1150S-60 | Polyoxyethylene alkyl ether | Kao Corporation |
| | | R₁: Hydrocarbon group having 11 carbon atoms | |
| | | The number of repeating units of polyoxyalkylene moietv: 50 | |
| | Polyethylene glycol 4000 | Polyethylene glycol | KANTO CHEMICAL CO., INC. |
| | | Hydrocarbon group having 2 carbon atoms | |
| | | The number of repeating units of polyoxyalkylene moietv: 90 | |

### [Example 2]

A sulfur-modified polychloroprene latex composition was prepared in the same manner as in Example 1 except that the type and amount of the compound having a polyoxyalkylene structure added to the sulfur-modified polychloroprene latex obtained in Production Example 1 were changed, and the metal oxide, vulcanization accelerator, and antioxidant were added in the amounts shown in Table 2, and then a dip-molded cross-linked film was fabricated.

In the Addition system 2-1 in Table 2, EMULGEN (registered trademark) 404 (manufactured by Kao Corporation) was added, in the Addition system 2-2, EMULGEN (registered trademark) 709 (manufactured by Kao Corporation) was added, in the Addition system 2-4, EMULGEN (registered trademark) 1135S-70 (manufactured by Kao Corporation) was added, and in the Addition system 2-5, EMULGEN (registered trademark) 1150S-60 (manufactured by Kao Corporation) was added.

### [Example 3]

In the Production Example 1 of sulfur-modified polychloroprene latex, the amount (parts by mass) of 2,3-dichloro-1,3-butadiene was changed to carry out polymerization. To the obtained sulfur-modified polychloroprene latex was added EMULGEN (registered trademark) 1118S-70 to prepare a sulfur-modified polychloroprene latex composition, and then a dip-molded cross-linked film was fabricated.

### [Comparative Examples 1 to 3]

In the Production Example 1 of sulfur-modified polychloroprene latex, the amount of 2,3-dichloro-1,3-butadiene, the amount of sulfur (parts by mass), and the amount of dodecyl mercaptan (parts by mass), were changed to carry out polymerization and then to obtain sulfur-modified polychloroprene latex to be used in each of Comparative Examples 1 to 3. The obtained polychloroprene latex was compounded with each component listed in Table 3 in the amount listed in Table 3 to prepare a sulfur-modified polychloroprene latex composition, and a dip-molded cross-linked film was fabricated by using the resulting composition.

The results of implementation described above are summarized in Table 2 and Table 3.

**[Table 2]**

| | Example 1 | | Example 2 | | | | | Example 3 | |
|---|---|---|---|---|---|---|---|---|---|
| | ref | Addition system 1-1 | ref | Addition system 2-1 | Addition system 2-2 | Addition system 2-4 | Addition system 2-5 | ref | Addition system 3-1 |
| 2-Chloro-1,3-butadiene (parts by mass) | 100 | 100 | 100 | 100 | 100 | 100 | 100 | 91.5 | 91.5 |
| 2,3-Dichloro-1,3-butadiene | 0 | 0 | 0 | 0 | 0 | 0 | 0 | 8.5 | 8.5 |
| Sulfur | 0.25 | 0.25 | 0.25 | 0.25 | 0.25 | 0.25 | 0.25 | 0.25 | 0.25 |
| Dodecyl mercaptan | 0 | 0 | 0 | 0 | 0 | 0 | 0 | 0 | 0 |
| EMULGEN 404 (parts by mass) | 0 | 0 | 0 | 0.5 | 0 | 0 | 0 | 0 | 0 |
| EMULGEN 709 (parts by mass) | 0 | 0.5 | 0 | 0 | 0.5 | 0 | 0 | 0 | 0 |
| EMULGEN 1118S-70 (parts by mass) | 0 | 0 | 0 | 0 | 0 | 0 | 0 | 0 | 0.5 |
| EMULGEN 1135S-70 (parts by mass) | 0 | 0 | 0 | 0 | 0 | 0.5 | 0 | 0 | 0 |
| EMULGEN 1150S-60 (parts by mass) | 0 | 0 | 0 | 0 | 0 | 0 | 0.5 | 0 | 0 |
| Polyethylene glycol 4000 (parts bv mass) | 0 | 0 | 0 | 0 | 0 | 0 | 0 | 0 | 0 |
| Sulfur-modified polychloroprene latex composition (parts by mass) | 100 | 100 | 100 | 100 | 100 | 100 | 100 | 100 | 100 |
| ZnO (parts by mass) | 0 | 0 | 5.0 | 5.0 | 5.0 | 5.0 | 5.0 | 0 | 0 |
| Sulfur (parts by mass) | 0 | 0 | 1.5 | 1.5 | 1.5 | 1.5 | 1.5 | 0 | 0 |
| NOCCELER BZ (ZDBC) (parts by mass) | 0 | 0 | 2.0 | 2.0 | 2.0 | 2.0 | 2.0 | 0 | 0 |
| NOCCELER C (DPTU) (parts by mass) | 0 | 0 | 0.0 | 00 | 00 | 00 | 00 | 0 | 0 |
| NOCCELER D (DPG) (parts by mass) | 0 | 0 | 0.0 | 00 | 00 | 00 | 00 | 0 | 0 |
| K-840 (WingstayL water dispersion) (parts bv mass) | 0 | 0 | 2.0 | 2.0 | 2.0 | 2.0 | 2.0 | 0 | 0 |
| Cross-linking temperature (°C) | 130 | 130 | 130 | 130 | 130 | 130 | 130 | 130 | 130 |
| Cross-linking time (minutes) | 30 | 30 | 30 | 30 | 30 | 30 | 30 | 30 | 30 |
| Modulus at 100% elongation (MPa) | 0.79 | 0.84 | 0.94 | 0.85 | 0.86 | 087 | 080 | 080 | 0.86 |
| Modulus at 300% elongation (MPa) | 1.08 | 1.13 | 1.40 | 1.26 | 1.28 | 1.27 | 1.20 | 1.07 | 1.11 |
| Modulus at 500% elongation (MPa) | 1.49 | 1.55 | 2.08 | 1.65 | 1.68 | 1.63 | 1.68 | 1.61 | 1.34 |
| Tensile strength (MPa) | 22.1 | 26.7 | 18.4 | 25.6 | 27.2 | 26.2 | 23.5 | 18.3 | 24.3 |
| Elongation at break (%) | 1100 | 1050 | 1000 | 1075 | 1075 | 1050 | 1075 | 1100 | 1075 |
| Improvement ratio of strength at break (%) (Tensile strength of Addition system - Tensile strength of ref)/(Tensile strength of ref) | - | 21% | - | 39% | 48% | 42% | 28% | - | 33% |

**[Table 3]**

| | Comparative Example 1 | | | | Comparative Example 2 | | Comparative Example 3 | |
|---|---|---|---|---|---|---|---|---|
| | ref | Addition system 4-1 | Addition system 4-2 | Addition system 4-3 | ref | Addition system 5-1 | ref | Addition system 6-1 |
| 2-Chloro-1,3-butadiene (parts by mass) | 100 | 100 | 100 | 100 | 91.5 | 91.5 | 91.5 | 91.5 |
| 2,3-Dichloro-1,3-butadiene | 0 | 0 | 0 | 0 | 8.5 | 8.5 | 8.5 | 8.5 |
| Sulfur | 0 | 0 | 0 | 0 | 0 | 0 | 0 | 0 |
| Dodecyl mercaptan | 0.017 | 0.017 | 0.017 | 0.017 | 0.06 | 0.06 | 0.06 | 0.06 |
| EMULGEN 404 (parts by mass) | 0 | 0 | 0 | 0 | 0 | 0 | 0 | 0 |
| EMULGEN 709 (parts by mass) | 0 | 0.5 | 0 | 0 | 0 | 0 | 0 | 0 |
| EMULGEN 1118S-70 (parts by mass) | 0 | 0 | 0.5 | 0 | 0 | 0.5 | 0 | 0.5 |
| EMULGEN 1135S-70 (parts by mass) | 0 | 0 | 0 | 0 | 0 | 0 | 0 | 0 |
| EMULGEN 1150S-60 (parts by mass) | 0 | 0 | 0 | 0 | 0 | 0 | 0 | 0 |
| Polyethylene glycol 4000 (parts by mass) | 0 | 0 | 0 | 0.5 | 0 | 0 | 0 | 0 |
| Sulfur-modified polychloroprene latex composition (parts by mass) | 100 | 100 | 100 | 100 | 100 | 100 | 100 | 100 |
| ZnO (parts by mass) | 0 | 0 | 0 | 0 | 0 | 0 | 5.0 | 5.0 |
| Sulfur (parts by mass) | 0 | 0 | 0 | 0 | 0 | 0 | 1.5 | 1.5 |
| NOCCELER BZ (ZDBC) (parts by mass) | 0 | 0 | 0 | 0 | 0 | 0 | 2.0 | 2.0 |
| NOCCELER C (DPTU) (parts by mass) | 0 | 0 | 0 | 0 | 0 | 0 | 0.0 | 00 |
| NOCCELER D (DPG) (parts by mass) | 0 | 0 | 0 | 0 | 0 | 0 | 00 | 00 |
| K-840 (WingstayL water dispersion) (parts bv mass) | 0 | 0 | 0 | 0 | 0 | 0 | 2.0 | 2.0 |
| Cross-linking temperature (°C) | 130 | 130 | 130 | 130 | 130 | 130 | 130 | 130 |
| Cross-linking time (minutes) | 30 | 30 | 30 | 30 | 30 | 30 | 30 | 30 |
| Modulus at 100% elongation (MPa) | 0.72 | 0.72 | 0.68 | 0.67 | 0.56 | 0.55 | 0.78 | 0.71 |
| Modulus at 300% elongation (MPa) | 0.83 | 0.81 | 0.74 | 0.78 | 0.89 | 0.90 | 1.03 | 0.80 |
| Modulus at 500% elongation (MPa) | 1.19 | 1.06 | 1.19 | 1.31 | 1.02 | 1.05 | 1.68 | 1.41 |
| Tensile strength (MPa) | 18.3 | 17.2 | 15.1 | 15.2 | 15.4 | 14.2 | 19.4 | 12.5 |
| Elongation at break (%) | 1400 | 1400 | 1450 | 1400 | 1550 | 1525 | 1225 | 1300 |
| Improvement ratio of strength at break (%) (Tensile strength of Addition system - Tensile strength of ref)/(Tensile strength of ref) | - | -6% | -15% | -15% | - | -8% | - | -35% |

As shown in Table 2 or Table 3, Examples 1 to 3 according to the present invention, in which the sulfur-modified polychloroprene latex composition contains the compound having a polyoxyalkylene structure, exhibit the favorable strengths such as the tensile strength of 25.6 MPa or more and the elongation at break of 1030% or higher. Examples 1 to 3 according to the present invention also demonstrate that the strength at break therein is improved by 20% or more compared to that of the dip-molded film fabricated from the ref composition free of the compound having a polyoxyalkylene structure. This effect is found to be exhibited regardless of the molecular weight of the polyoxyalkylene moiety or the length of the alkyl group in the side chain.

In Comparative Examples 1 to 3 that are sulfur-modified polychloroprene latex compositions, in which the modified polychloroprene latex was not copolymerized with sulfur, the mechanical strengths of these Comparative Examples are also found to be lower than that of the dip-molded film fabricated from the ref composition free of the compound having a polyoxyalkylene structure.

From the above, the composition obtained by the method for producing the sulfur-modified polychloroprene latex according to the present invention is found to result in the molded article obtained from the composition, having the excellent mechanical strength.

## Claims

1. A method for producing a sulfur-modified polychloroprene latex composition, comprising a step of blending a sulfur-modified polychloroprene in which a chloroprene monomer and sulfur are copolymerized and a compound having a polyoxyalkylene structure.

2. The method for producing a sulfur-modified polychloroprene latex composition according to claim 1, wherein a content of sulfur in the sulfur-modified polychloroprene is 0.1 to 1.0% by mass.

3. The method for producing a sulfur-modified polychloroprene latex composition according to claim 1 or claim 2, wherein a content of the compound having a polyoxyalkylene structure is 0.1 to 3.0% by mass relative to a total mass of the sulfur-modified polychloroprene.

4. The method for producing a sulfur-modified polychloroprene latex composition according to claim 1 or claim 2, wherein in the step of blending, a metal oxide, a vulcanization accelerator, sulfur and an antioxidant are further blended.

5. A sulfur-modified polychloroprene latex composition, comprising a sulfur-modified polychloroprene in which a chloroprene monomer and sulfur are copolymerized, and a compound having a polyoxyalkylene structure.

6. The sulfur-modified polychloroprene latex composition according to claim 5, wherein a content of sulfur in the sulfur-modified polychloroprene is 0.1 to 1.0% by mass.

7. The sulfur-modified polychloroprene latex composition according to claim 5, wherein a content of the compound having a polyoxyalkylene structure is 0.1 to 3.0% by mass relative to a total mass of the sulfur-modified polychloroprene.

8. The sulfur-modified polychloroprene latex composition according to claim 5, comprising a metal oxide, a vulcanization accelerator, sulfur and an antioxidant.

9. A rubber molded article obtained from the sulfur-modified polychloroprene latex composition according to claim 5.

10. A dip-molded product obtained from the sulfur-modified polychloroprene latex composition according to claim 5.

11. The dip-molded product according to claim 10, wherein the dip-molded product is gloves.
